(19) Europäisches Patentamt / European Patent Office / Office européen des brevets

(11) **EP 3 534 006 B1**

(12) **EUROPEAN PATENT SPECIFICATION**

(45) Date of publication and mention of the grant of the patent:
**24.02.2021 Bulletin 2021/08**

(21) Application number: **16919917.1**

(22) Date of filing: **12.12.2016**

(51) Int Cl.:
*F04C 23/00* (2006.01)     *F04C 29/00* (2006.01)
*F16C 3/06* (2006.01)

(86) International application number:
**PCT/CN2016/109506**

(87) International publication number:
**WO 2018/076480 (03.05.2018 Gazette 2018/18)**

(54) **CRANKSHAFT AND ROTARY COMPRESSOR**

KURBELWELLE UND ROTATIONSVERDICHTER

VILEBREQUIN ET COMPRESSEUR ROTATIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.10.2016 CN 201610948438**

(43) Date of publication of application:
**04.09.2019 Bulletin 2019/36**

(73) Proprietor: **Shanghai Highly Electrical Appliances Co., Ltd.**
**Shanghai 201206 (CN)**

(72) Inventors:
• **ZHOU, Yi**
  **Shanghai 201206 (CN)**
• **ZHANG, Haifeng**
  **Shanghai 201206 (CN)**
• **LOU, Hailin**
  **Shanghai 201206 (CN)**
• **YUAN, Hao**
  **Shanghai 201206 (CN)**
• **MAO, Kaizhi**
  **Shanghai 201206 (CN)**

(74) Representative: **PATERIS Patentanwälte PartmbB**
**Postfach 33 07 11**
**80067 München (DE)**

(56) References cited:
EP-A1- 2 770 212          EP-A2- 2 390 463
EP-A2- 2 644 894          EP-A2- 2 644 894
WO-A1-2012/073479         WO-A1-2012/073479
CN-A- 104 100 525         CN-A- 104 100 525
CN-A- 105 275 811         CN-A- 105 275 811
CN-B- 102 889 209         CN-B- 104 454 535
CN-U- 203 614 425         CN-U- 203 962 387
JP-A- H0 510 279          JP-A- H0 821 390
JP-A- 2008 014 150        JP-A- 2015 148 195
US-A- 5 087 170           US-A1- 2010 147 020
US-A1- 2011 027 117       US-B2- 8 858 196

**Description**

TECHNICAL FIELD

The present invention relates to the field of compressors, and in particular, to a crankshaft and a rotary compressor.

BACKGROUND

For a rotary compressor, friction loss is an important factor that affects the performance and reliability of the compressor. Smaller friction loss indicates a greater coefficient of performance (COP) and a higher reliability of the compressor. As a core rotating part in a compressor, the crankshaft produces a friction loss during operation which is one of the main sources of the compressor friction loss.

Therefore, in order to enhance the performance and reliability of the compressor, it is necessary to optimize the structure of the crankshaft to reduce the friction loss during crankshaft operation, thus reducing total friction loss of the compressor.

SUMMARY OF THE INVENTION

It is an object of the present invention to provide a crankshaft to solve the problem of the excessively large friction loss of a rotary compressor in the prior art, and enhance the performance and reliability of the rotary compressor.

To achieve the foregoing object, the present invention provides a crankshaft, including a long shaft and a short shaft, wherein a ratio of an outer diameter of the long shaft to an inner diameter of the compressor housing is less than 0.14 and greater than 0.07, and a ratio of an outer diameter of the short shaft to the inner diameter of the compressor housing is less than or equal to 0.12 and greater than 0.05.

Preferably, the ratio of the outer diameter of the long shaft to the inner diameter of the compressor housing ranges from 0.075 to 0.134.

Preferably, the ratio of the outer diameter of the long shaft to the inner diameter of the compressor housing ranges from 0.075 to 0.129.

Preferably, the ratio of the outer diameter of the long shaft to the inner diameter of the compressor housing is 0.075, 0.119, or 0.129.

Preferably, the ratio of the outer diameter of the short shaft to the inner diameter of the compressor housing ranges from 0.056 to 0.12.

Preferably, the ratio of the outer diameter of the short shaft to the inner diameter of the compressor housing ranges from 0.056 to 0.114.

Preferably, the ratio of the outer diameter of the short shaft to the inner diameter of the compressor housing ranges from 0.056 to 0.109.

Preferably, the ratio of the outer diameter of the short shaft to the inner diameter of the compressor housing is 0.056, 0.101, or 0.109.

To achieve the foregoing object, the present invention also provides a rotary compressor including any foregoing crankshaft.

To sum up, in the technical solution of the present invention, the ratio of the outer diameter of the long shaft of the crankshaft to the inner diameter of the compressor housing is set to be less than 0.14 and greater than 0.07, and the ratio of the outer diameter of the short shaft of the crankshaft to the inner diameter of the compressor housing is set to be less than or equal to 0.12 and greater than 0.05, reducing a contact area of the crankshaft in operation as a whole. Thereby, friction loss produced by operation of the crankshaft is reduced and then the COP of the compressor is enhanced.

Particularly, the applicants find through researches that, an excessively large outer diameter of the crankshaft results in an excessively large friction loss, affecting the compressor performance; while an excessively small outer diameter of the crankshaft results in an aggravated deformation, and the relatively large deformation amount causes a sharp increase in abrasion and a difficult processing. Therefore, in the technical solution of the present invention, the ratio of the outer diameter of the long shaft to the inner diameter of the compressor housing is further set to a value ranging from 0.075 to 0.129, and the ratio of the outer diameter of the short shaft to the inner diameter of the compressor housing is further set to a value ranging from 0.056 to 0.109. In such a way, the problem found in the researches is able to be avoided, and an optimal range of the COP is able to be achieved.

BRIEF DESCRIPTION OF THE DRAWINGS

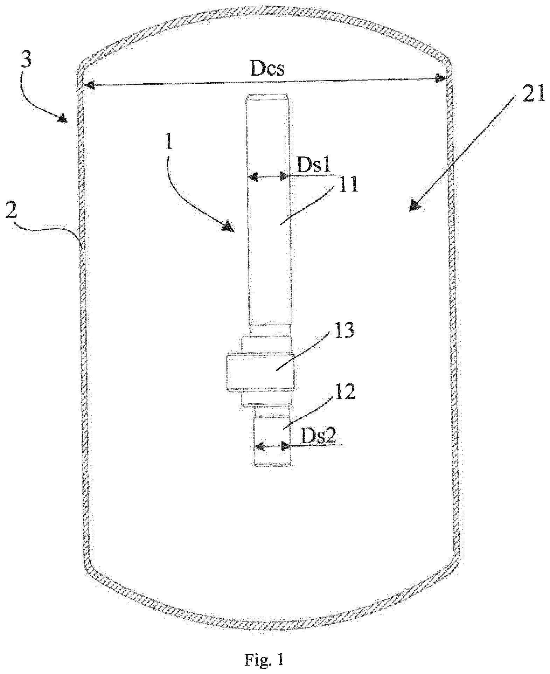

FIG. 1 is a schematic diagram of a crankshaft and a compressor housing according to an embodiment of the present invention, where the crankshaft is disposed inside the compressor housing; and

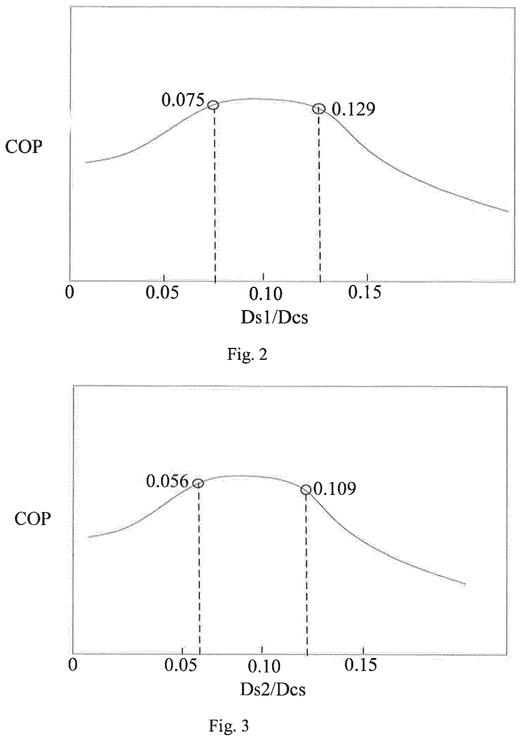

FIG. 2 to FIG. 3 are graphs of the relationship between a ratio of an outer diameter of the crankshaft to the inner diameter of the compressor housing, and a COP of the compressor according to an embodiment of the present invention, where the abscissa in FIG. 2 represents a ratio of an outer diameter of a long shaft to the inner diameter of the compressor housing, and the abscissa in FIG. 3 represents a ratio of an outer diameter of a short shaft to the inner diameter of the compressor housing.

In the drawings:

1-Crankshaft, 11-Long shaft, 12-Short shaft, 13-Eccentric part
2-Compressor housing, 21-Inner chamber
3-Rotary compressor
Ds1-Outer diameter of the long shaft of the crankshaft
Dcs-Inner diameter of the compressor housing
Ds2-Outer diameter of the short shaft of the crankshaft

DETAILED DESCRIPTION

As described in the background, the crankshaft produces a friction loss during operation which is one of the main sources of the compressor friction loss. The applicants find through researches that, a ratio of an outer diameter of the crankshaft used in a rotary compressor to an inner diameter of the compressor housing is associated with the COP of the compressor. When a ratio of an outer diameter of a long shaft of the crankshaft used in the rotary compressor to the inner diameter of the compressor housing is greater than or equal to 0.14, and a ratio of an outer diameter of a short shaft of the crankshaft to the inner diameter of the compressor housing is greater than 0.12, friction loss of the outer diameter of the crankshaft accounts for about 48% of the total friction loss of the compressor. Therefore, a severe friction loss of the outer diameter of the crankshaft greatly affects the compressor performance. The applicants find through a further research that, the relationship between the ratio of the outer diameter of the crankshaft to the inner diameter of the compressor housing, and the COP of the compressor is roughly normally distributed. By appropriately adjusting the ratio of the outer diameter of the long shaft of the crankshaft to the inner diameter of the compressor housing, and the ratio of the outer diameter of the short shaft of the crankshaft to the inner diameter of the compressor housing, an ideal COP is able to be achieved, the structural strength of the crankshaft is able to be ensured and the processing thereof is eased.

Based on the foregoing research and discovery, the present invention provides a crankshaft to solve the problem of the excessively large friction loss of the crankshaft in the prior art. The crankshaft and the rotary compressor provided in the present invention will be described in greater detail below with reference to FIGs. 1 to 3. It should be noted that, that the accompanying drawings are presented in a very simplified form and not necessarily presented to scale, with the only intention to facilitate convenience and clarity in explaining the object of the present application.

Unless clearly specified otherwise in the context, the singular forms "a", "an" and "the" used in the specification and the appended claims are also intended to include the plural forms. Unless clearly specified otherwise in the context, the term "or" used in the specification and the appended claims is usually used in the sense of including "and/or" .

As shown in FIG. 1, which is a schematic diagram of a crankshaft according to an embodiment of the present invention, the crankshaft in this embodiment is particularly a crankshaft used in a rotary compressor. In the rotary compressor, a compression mechanism is located below an electric motor mechanism. Therefore, a short shaft of the crankshaft is located on the lower side, while a long shaft is located on the upper side.

The crankshaft 1 of this embodiment includes a long shaft 11 and a short shaft 12 each being a cylindrical shaft and having an equal outer diameter. That is, the outer diameter of the long shaft 11 at each position along the axial direction is identical, which is denoted as Ds1; and the outer diameter of the short shaft 12 at each position along the axial direction is also identical, which is denoted as Ds2. Particularly, a ratio of the outer diameter Ds1 of the long shaft 11 to an inner diameter Dcs of a compressor housing 2, and a ratio of the outer diameter Ds2 of the short shaft 12 to the inner diameter Dcs of the compressor housing 2 respectively satisfy the following relations:

$$0.07 < Ds1/Dcs < 0.14, \qquad 0.05 < Ds2/Dcs \leq 0.12 \qquad (1)$$

It can be known from the above formula (1) that, in the case that the inner diameter Dcs of the compressor housing 2 is constant, friction loss of the compressor is mainly produced by the crankshaft 1, particularly by the short shaft 12 mounted on the compression mechanism and the long shaft 11 mounted on the electric motor mechanism.

Therefore, if the outer diameter of the long shaft 11 and the outer diameter of the short shaft 12 are reduced together, a contact area between the crankshaft 1 and mounted parts during operation is able to be reduced, and thus the friction loss is reduced, improving the COP of the compressor.

In this embodiment, the compressor housing 2 has an inner chamber 21 which is in the shape of a cylinder on the whole. Two opposite bottom faces of the inner chamber 21 are arc-shaped. The inner diameter of the cylindrical part of the inner chamber 21 represents the inner diameter $Dcs$ of the compressor housing 2 in this embodiment.

Further, after a long-term research by the applicants, graphs of the relationship between a ratio of an outer diameter of the crankshaft to the inner diameter of the compressor housing, as shown in FIG. 2 and FIG. 3, are obtained. In FIGs. 2 and 3, the ordinates represent the COP. The abscissa in FIG. 2 represents a ratio $Ds1/Dcs$ of the outer diameter $Ds1$ of the long shaft 11 to the inner diameter $Dcs$ of the compressor housing 2, and the abscissa in FIG. 3 represents a ratio $Ds2/Dcs$ of the outer diameter $Ds2$ of the short shaft 12 to the inner diameter $Dcs$ of the compressor housing 2. It should be noted that, the COP curves shown in FIGs. 2 and 3 are identical, which are determined by $Ds1/Dcs$ and $Ds2/Dcs$ together. For ease of description, different abscissas are used to show the COP curve, which, however, does not mean that the COP can be obtained according to one of $Ds1/Dcs$ and $Ds2/Dcs$.

Thus, it can be seen from FIGs. 2 and 3 that, on the whole, a relationship between the ratio of the outer diameter of the crankshaft 1 to the inner diameter of the compressor housing 2, and the COP is normally distributed.

Furthermore, an excessively large outer diameter of the crankshaft results in an excessively large friction loss, affecting the compressor performance; while an excessively small outer diameter of the crankshaft results in an aggravated deformation, and the relatively large deformation amount causes a sharp increase in abrasion and a difficult processing. By comprehensively considering the previous problems, the applicants set the ratio of the outer diameter $Ds1$ of the long shaft 11 to the inner diameter $Dcs$ of the compressor housing 2, and the ratio of the outer diameter $Ds2$ of the short shaft 12 to the inner diameter $Dcs$ of the compressor housing 2 in such a manner that they meet the following relation formulas respectively:

$$0.075 \leq Ds1/Dcs \leq 0.134, \quad 0.056 \leq Ds2/Dcs \leq 0.12 \qquad (2)$$

In the formula (2), more preferably,

$$0.056 \leq Ds2/Dcs \leq 0.114 \qquad (3)$$

Further, the ratio of the outer diameter $Ds1$ of the long shaft 11 to the inner diameter $Dcs$ of the compressor housing 2, and the ratio of the outer diameter $Ds2$ of the short shaft 12 to the inner diameter $Dcs$ of the compressor housing 2 preferably satisfy the following relations respectively:

$$0.075 \leq Ds1/Dcs \leq 0.129, \quad 0.056 \leq Ds2/Dcs \leq 0.109 \qquad (4)$$

As shown in FIGs. 2 and 3, when the ratio of $Ds1/Dcs$ ranges from 0.075 to 0.129 and the ratio of $Ds2/Dcs$ ranges from 0.056 to 0.109, the COP falls in an optimal range. Moreover, when the ratios fall within the above ranges, not only the rigidity of the whole crankshaft 1 is high but also the processing for the crankshaft 1 is eased.

Further, the ratio of $Ds1/Dcs$ is preferably selected as 0.075, 0.119, or 0.129. The ratio of $Ds2/Dcs$ is preferably set to 0.056, 0.101, or 0.109.

In order to describe the performance of the crankshaft, this embodiment performs corresponding tests on the crankshaft to verify the improvement of the compressor performance. The following implementations specifically describe the crankshafts of different types and their corresponding test results. The following table describes effects of two crankshafts having different outer diameters on the COP in the case of a specific inner diameter (107 mm) of the compressor housing.

In a first crankshaft, the ratio of $Ds1/Dcs$ is set to 0.149, and the ratio of $Ds2/Dcs$ is set to 0.131.

In a second crankshaft, the ratio of $Ds1/Dcs$ is set to 0.119, and the ratio of $Ds2/Dcs$ is set to 0.101.

Afterwards, the applicants evaluate the above two crankshafts in an actual situation, and obtain that: the COP in use of the second crankshaft is increased by 1.2% as compared with the COP in use of the first crankshaft. That is, if the COP in use of the first crankshaft is 1, the COP in use of the second crankshaft is 1.012.

| Inner diameter of the compressor housing (Dcs, mm) | Ratio of an outer diameter of a long shaft to the inner diameter of the compressor housing (Ds1/Dcs) | Ratio of an outer diameter of a short shaft to the inner diameter of the compressor housing (Ds2/Dcs) | COP of the compressor |
|---|---|---|---|
| 107 | 0.149 | 0.131 | 1.0 |
| 107 | 0.119 | 0.101 | 1.012 |

Thus, undoubtedly, the COP corresponding to the crankshaft of the present invention is obviously higher than that corresponding to the crankshaft in the prior art. Therefore, the compressor of this embodiment is obviously enhanced in performance. It should be noted that, to ensure accuracy of the test, the same working conditions are set in the test procedure.

In addition, continuously referring to FIG. 1, the crankshaft 1 further includes an eccentric part 13 mounted on the long shaft 11, or on the short shaft 12, or on both the long shaft 11 and the short shaft 12. The eccentric part 13 is mainly used to sleeve a roller, such that the roller is able to be driven by the eccentric part to roll along an inner wall of a pneumatic cylinder, to compress the air.

Based on the above description, this embodiment further provides a rotary compressor 3 comprising the above-described crankshaft 1. The crankshaft 1 is mounted in the compressor housing 2 of the rotary compressor 3, and is able to rotate at a high speed under the support by the upper and lower bearings, such that the compression mechanism compresses the air to do work. Since the rotary compressor 3 of this embodiment uses the crankshaft 1 of this embodiment, reference is made to the above embodiment for advantageous effects brought by the crankshaft 1.

To sum up, in the technical solution of the present invention, the ratio of the outer diameter of the long shaft of the crankshaft to the inner diameter of the compressor housing is set to be less than 0.14 and greater than 0.07, and the ratio of the outer diameter of the short shaft of the crankshaft to the inner diameter of the compressor housing is set to be less than or equal to 0.12 and greater than 0.05, reducing a contact area of the crankshaft in operation as a whole. Thereby, friction loss produced by operation of the crankshaft is reduced and then the COP of the compressor is enhanced.

Particularly, in the technical solution of the present invention, the ratio of the outer diameter of the long shaft to the inner diameter of the compressor housing is further set to a value ranging from 0.075 to 0.129, and the ratio of the outer diameter of the short shaft to the inner diameter of the compressor housing is set to a value ranging from 0.056 to 0.109. In such a way, an optimal range of the COP is able to be achieved. Moreover, the problems of an excessively large friction loss caused by an excessively large outer diameter of the crankshaft, and an increased abrasion caused by an excessively small outer diameter of the crankshaft are able to be avoided, and processing difficulty of the crankshaft is able to be reduced.

The above merely describes preferred embodiments of the present invention, and is not intended to limit protection scope of the present invention. Any replacements and modifications made by persons of ordinary skilled in the art according to the disclosure should fall within the protection scope of appended claims.

**Claims**

1. A compressor with a compressor housing (2) and a crankshaft (1), the crankshaft (1) is mounted in the compressor housing (2) and comprises a long shaft (11) and a short shaft (12), **characterized in that** a ratio of an outer diameter of the long shaft (11) to an inner diameter of the compressor housing (2) is less than 0.14 and greater than 0.07, and a ratio of an outer diameter of the short shaft (12) to the inner diameter of the compressor housing (2) is less than or equal to 0.12 and greater than 0.05.

2. The compressor of claim 1, wherein the ratio of the outer diameter of the long shaft (11) to the inner diameter of the compressor housing (2) ranges from 0.075 to 0.134.

3. The compressor of claim 2, wherein the ratio of the outer diameter of the long shaft (11) to the inner diameter of the compressor housing (2) ranges from 0.075 to 0.129.

4. The compressor of claim 3, wherein the ratio of the outer diameter of the long shaft (11) to the inner diameter of the compressor housing (2) is 0.075, 0.119, or 0.129.

5. The compressor of any one of claims 1 to 4, wherein the ratio of the outer diameter of the short shaft (12) to the inner diameter of the compressor housing (2) ranges from 0.056 to 0.12.

**6.** The compressor of claim 5, wherein the ratio of the outer diameter of the short shaft (12) to the inner diameter of the compressor housing (2) ranges from 0.056 to 0.114.

**7.** The compressor of claim 6, wherein the ratio of the outer diameter of the short shaft (12) to the inner diameter of the compressor housing (2) ranges from 0.056 to 0.109.

**8.** The compressor of claim 7, wherein the ratio of the outer diameter of the short shaft (12) to the inner diameter of the compressor housing (2) is 0.056, 0.101, or 0.109.

**Patentansprüche**

**1.** Verdichter mit einem Verdichtergehäuse (2) und einer Kurbelwelle (1), die Kurbelwelle (1) ist in dem Verdichtergehäuse (2) gelagert und weist eine lange Welle (11) und eine kurze Welle (12) auf, **dadurch gekennzeichnet, dass** ein Verhältnis eines Außendurchmessers der langen Welle (11) zu einem Innendurchmesser des Verdichtergehäuses (2) kleiner als 0,14 und größer als 0,07 ist, und ein Verhältnis eines Außendurchmessers der kurzen Welle (12) zu dem Innendurchmesser des Verdichtergehäuses (2) kleiner als oder gleich 0,12 und größer als 0,05 ist.

**2.** Verdichter nach Anspruch 1, wobei das Verhältnis des Außendurchmessers der langen Welle (11) zu dem Innendurchmesser des Verdichtergehäuses (2) im Bereich von 0,075 bis 0,134 liegt.

**3.** Verdichter nach Anspruch 2, wobei das Verhältnis des Außendurchmessers der langen Welle (11) zu dem Innendurchmesser des Verdichtergehäuses (2) im Bereich von 0,075 bis 0,129 liegt.

**4.** Verdichter nach Anspruch 3, wobei das Verhältnis des Außendurchmessers der langen Welle (11) zu dem Innendurchmesser des Verdichtergehäuses (2) 0,075, 0,119 oder 0,129 beträgt.

**5.** Verdichter nach einem der Ansprüche 1 bis 4, wobei das Verhältnis des Außendurchmessers der kurzen Welle (12) zu dem Innendurchmesser des Verdichtergehäuses (2) im Bereich von 0,056 bis 0,12 liegt.

**6.** Verdichter nach Anspruch 5, wobei das Verhältnis des Außendurchmessers der kurzen Welle (12) zu dem Innendurchmesser des Verdichtergehäuses (2) im Bereich von 0,056 bis 0,114 liegt.

**7.** Verdichter nach Anspruch 6, wobei das Verhältnis des Außendurchmessers der kurzen Welle (12) zu dem Innendurchmesser des Verdichtergehäuses (2) im Bereich von 0,056 bis 0,109 liegt.

**8.** Verdichter nach Anspruch 7, wobei das Verhältnis des Außendurchmessers der kurzen Welle (12) zu dem Innendurchmesser des Verdichtergehäuses (2) 0,056, 0,101 oder 0,109 beträgt.

**Revendications**

**1.** Compresseur avec un carter de compresseur (2) et un vilebrequin (1), le vilebrequin (1) est monté dans le carter de compresseur (2) et comprend un arbre long (11) et un arbre court (12), **caractérisé en ce qu'**un rapport entre un diamètre externe de l'arbre long (11) et un diamètre interne du carter de compresseur (2) est inférieur à 0,14 et supérieur à 0,07 et qu'un rapport entre un diamètre externe de l'arbre court (12) et le diamètre interne du carter de compresseur (2) est inférieur ou égal à 0,12 et supérieur à 0,05.

**2.** Compresseur selon la revendication 1, dans lequel le rapport entre le diamètre externe de l'arbre long (11) et le diamètre interne du carter de compresseur (2) varie entre 0,075 et 0,134.

**3.** Compresseur selon la revendication 2, dans lequel le rapport entre le diamètre externe de l'arbre long (11) et le diamètre interne du carter de compresseur (2) varie entre 0,075 et 0,129.

**4.** Compresseur selon la revendication 3, dans lequel le rapport entre le diamètre externe de l'arbre long (11) et le diamètre interne du carter de compresseur (2) est 0,075, 0,119 ou 0,129.

**5.** Compresseur selon l'une quelconque des revendications 1 à 4, dans lequel le rapport entre le diamètre externe de l'arbre court (12) et le diamètre interne du carter de compresseur (2) varie entre 0,056 et 0,12.

6. Compresseur selon la revendication 5, dans lequel le rapport entre le diamètre externe de l'arbre court (12) et le diamètre interne du carter de compresseur (2) varie entre 0,056 et 0,114.

7. Compresseur selon la revendication 6, dans lequel le rapport entre le diamètre externe de l'arbre court (12) et le diamètre interne du carter de compresseur (2) varie entre 0,056 et 0,109.

8. Compresseur selon la revendication 7, dans lequel le rapport entre le diamètre externe de l'arbre court (12) et le diamètre interne du carter de compresseur (2) est 0,056, 0,101 ou 0,109.

Fig. 1

COP

0.075 ⊖    ⊕ 0.129

0        0.05        0.10        0.15

Ds1/Dcs

Fig. 2

COP

0.056 ⊖    ⊕ 0.109

0        0.05        0.10        0.15

Ds2/Dcs

Fig. 3